# EUROPÄISCHE PATENTANMELDUNG

(11) **EP 1 889 655 A1**
(43) Veröffentlichungstag der Anmeldung: **20.02.2008**
(21) Anmeldenummer: 07015456.2
(22) Anmeldetag: 07.08.2007
(51) Int. Cl.: B01J 2/16, B01J 8/00, B01J 8/18, F26B 3/08

(54) **Wirbelschichtanlage**

(30) Priorität: 16.08.2006 DE 202006012634 U
(71) Anmelder: DIOSNA Dierks & Söhne GmbH, 49086 Osnabrück (DE)
(72) Erfinder: Schleimer Michael, 49124 Georgsmarienhütte (DE); Falck Henning, 26180 Rastede (DE)
(74) Vertreter: Bünemann, Egon

(57) **Zusammenfassung**

Wirbelschichtanlage (1) mit einem geschlossenen Wirbelschichtapparat (2), in dem auf einem Anströmboden (7) aufgelagertes, mit durch den Anströmboden (7) aufwärts hindurchgeleitetem Luftstrom in einen fluidisierten Zustand versetzbares und dabei einer chargenweisen Behandlung wie einem Trocknen, Sprühgranulieren oder Beschichten (Coating) unterziehbares Material nach der Behandlung über ein am Wirbelschichtapparat (2) im Bereich des Anströmbodens (7) angeordnetes Entleerventil (16) zu entleeren ist, wobei der Luftstrom während der Behandlung mittels einer stromab angeordneten Saugquelle (11) bei einem Unterdruck im Wirbelschichtapparat (2) oberhalb des Anströmbodens (7) aufrechterhalten wird, wird im Sinne einer einfachen, verläßlichen und rückstandsfreien Entleerung ausgestaltet, daß stromauf im Luftstrom vor dem Wirbelschichtapparat (2) eine beim Entleeren zuschaltbare Druckquelle (24) angeordnet ist.

## Beschreibung

Die Erfindung betrifft eine Wirbelschichtanlage nach dem Oberbegriff des Anspruchs 1. Bei der chargenweisen Behandlung fluidisierbarer Güter wie Pulver, Granulate oder Pellets in geschlossenen Wirbelschichtapparaten, bei der das Material einem Luft- oder Gasstrom ausgesetzt wird, um es etwa zu einer Trocknung, zu einer Sprühgranulation unter Zugabe flüssiger Substanzen oder bei einer Ummantelung (Coating) in einem beweglichen Schwebezustand oberhalb eines Anströmbodens zu halten, hat sich eine Saugquelle stromab als vorteilhaft herausgestellt, die einerseits den erforderlichen Luftstrom erzeugt, andererseits aber auch innerhalb des Materialbehälters für einen Unterdruck sorgt, der einer Ausstreuung von Material am Wirbelschichtapparat und über diesen hinaus entgegenwirkt. Dies ist insbesondere bei Aktivstoffen jeglicher Art, vor allem bei Aktivstoffen physiologischer Wirkung, zum Schutz der Umwelt wichtig, dient aber auch dazu, Materialverluste zu reduzieren.

Der vorstehend und auch im folgenden angesprochene Luftstrom und das gasförmige Strömungsmedium Luft stehen für beliebige verwendbare Formen von Gas und sind im folgenden nur deshalb durch "Luft" wiedergegeben, weil viele geläufige Bezeichnungen aus der Praxis heraus mit "Luft" geprägt sind. Somit sind im folgenden die auf "Luft" bezogenen Ausdrücke letztlich allgemeiner auch auf sonstige Gase, die in Wirbelschichtanlagen in Betracht kommen können, zu beziehen. Dazu gehören beispielsweise auch Inertgase wie etwa Stickstoff.

Bei geschlossenen Wirbelschichtapparaten zum chargenweisen Behandeln von Materialien ist nach der Behandlung eine Entleerung vorzusehen, die herkömmlich etwa in einer mechanischen Weise durch Kippen des Wirbelschichtapparats oder des Anströmbodens erstellt worden ist, was aber umständlich und insbesondere bei größeren Wirbelschichtapparaten und größeren Chargen unpraktikabel erscheint.

Eine besser an den Betrieb einer solchen Wirbelschichtanlage angepaßte Entleerung nach dem Stand der Technik sieht den Anschluß eines Vakuumfördergeräts an das Entleerventil des Wirbelschichtapparats vor, um das Produkt von dem Anströmboden weg seitlich abzusaugen. Diese Entleerung verursacht allerdings insofern ein Problem, weil das absaugende Vakuumfördergerät der Saugquelle für den Luftstrom durch den Anströmboden entgegenarbeiten muß. Dies führt zum einen zu entsprechend höheren Leistungsanforderungen für das Vakuumfördergerät, erschwert aber auch die Entleerung. Wenn nämlich der Luftstrom durch den Anströmboden gestört wird, bricht der Zustand der Fluidisierung des Materials bereichsweise zusammen. Die nicht mehr schwebenden Partikel liegen fest aufeinander und lassen sich nicht mehr leicht und vollständig zum Entleerventil hin bewegen.

Aufgabe der Erfindung ist es hiernach, eine Wirbelschichtanlage zu schaffen, die einfach, verläßlich und rückstandsfrei zu entleeren ist.

Gemäß der Erfindung wird diese Aufgabe von einer Wirbelschichtanlage nach dem Oberbegriff des Anspruchs 1 ausgehend mit den kennzeichnenden Merkmalen des Anspruchs 1 gelöst.

Die erfindungsgemäße Lösung ermöglicht es, den fluidisierenden Luftstrom auch beim Entleeren vollständig aufrechtzuerhalten, dabei aber den Luftdruck im Wirbelschichtapparat und damit auch im Bereich des über dem Anströmboden schwebend gehaltenen Material anzuheben, um damit einen Austrag des Materials über das Entleerventil in einer einfachen und vollständigen Weise zu erzielen.

Dabei kann der Austrag des fertigen Produkts in einen Produktcontainer nach unten hin unter Schwerkraftwirkung erfolgen, so daß typischerweise auf ein Vakuumfördergerät in Verbindung mit dem Produktcontainer verzichtet werden kann, wodurch sich an dieser Stelle der gerätetechnische Aufwand reduziert.

Die dazu im Luftstrom vorzusehende Druckquelle wird zweckmäßig durch einen Ventilator oder deren mehrere bereitgestellt, genauso wie die herkömmliche Saugquelle typischerweise in einem Ventilator, nämlich einem Abluftventilator, besteht. Der Abluftventilator wird in einer bevorzugten Ausführungsform durch einen Luftmengenmesser gesteuert, der im Luftstrom vor dem Anströmboden, also auf der Seite der Druckquelle liegt. Dies hat den besonderen Effekt, daß bei Zuschalten des Zuluftventilators als Druckquelle für das Entleeren ein vergrößerter Zuluftstrom eintritt, aufgrund dessen der Luftmengenmesser den Abluftventilator herunterregelt. Die Durchströmung des Anströmbodens bleibt erhalten, die Saugwirkung des Abluftventilators wird allerdings reduziert mit Vorteil für einen leichteren Austrag des Produkts aus dem Prozeßraum oberhalb des Anströmbodens im Wirbelschichtapparat.

Wirbelschichtapparate dieser Art sind typischerweise mit Filtereinrichtungen ausgestattet, weisen also zumindest einen Filter auf, der regelmäßig im Wirbelschichtapparat oberhalb des Anströmbodens angeordnet ist und staubende, leichte Materialpartikel, die mit dem Luftstrom getragen werden, abfängt. Die Rückgewinnung von Partikeln aus den Filtern ist durch pneumatische, stoßförmig arbeitende Einrichtungen möglich, die einen rückwärts gerichteten Blasstrom durch die Filter erzeugen. Hierfür ist es vorteilhaft, den Luftmengenmesse bzw. die von diesem ausgehende Regelung dahingehend zu beeinflussen, daß die Wirkung der Saugquelle reduziert wird, so daß die Feinpartikel aus dem Filter zum Anströmboden hin und dann auch in das Entleerventil gelangen können.

Im Hinblick auf grobe Partikel ist es vorteilhaft, die Leistung der Druckquelle heraufsetzen zu können. Nach einem Austrag von Partikeln einer gut verwertbaren mittleren Partikelgrößenverteilung, dem "Gutkorn", kann dann - vorzugsweise nach einem Wechsel des Produktbehälters - Überkorn mit einer heraufgesetzten Leistung der Druckquelle ausgetragen werden.

Im Ergebnis liefert die erfindungsgemäße Ausführungsform eine sehr bequeme, schnelle, verläßliche und vollständige Entleerung.

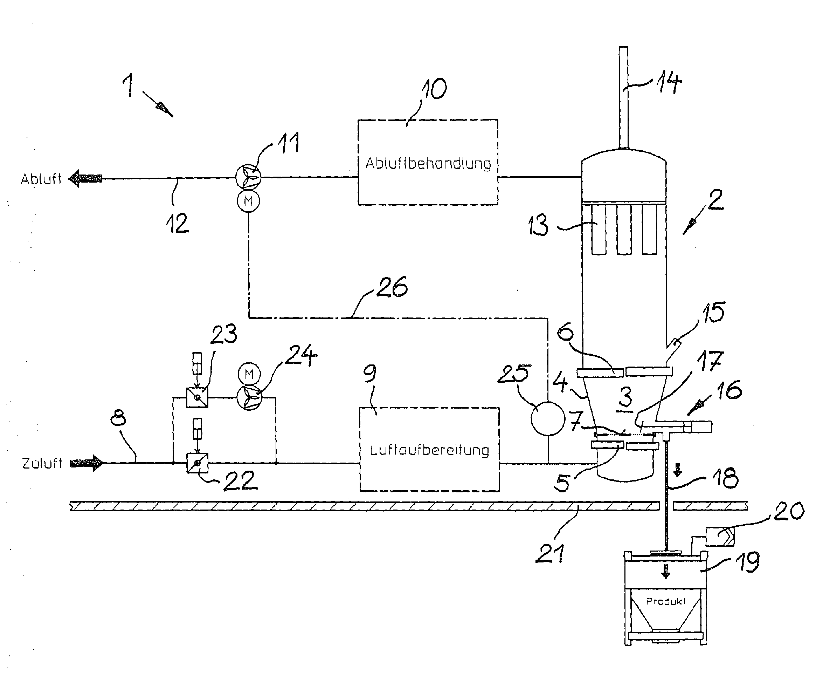

Ein Ausführungsbeispiel der Erfindung ist in der Zeichnung dargestellt und wird nachfolgend näher beschrieben. Die einzige Figur der Zeichnung zeigt eine schematisierte Darstellung einer Wirbelschichtanlage.

Kernstück der insgesamt mit 1 bezeichneten Wirbelschichtanlage ist ein Wirbelschichtapparat 2 mit einem Prozeßraum 3 in einem seitlich herausziehbaren oder herausschwenkbaren (konischen) Materialbehälterteil 4, über geteilte Ringelemente 5 und 6 mit zwischengelagerten Abdichtungen lösbar an die übrigen Teile des Wirbelschichtapparats 2 angeschlossen und mit einem Anströmboden 7 im unteren Bereich ausgestattet.

Der Anströmboden 7 wird von einem aufwärtsgerichteten und vorzugsweise auch um eine senkrechte Mittelachse rotatorisch wirbelnden Luftstrom durchsetzt, um darauf aufgelagertes fluidisierbares Material in einen bewegten Schwebezustand zu versetzen, in dem es getrocknet, gemischt oder unter Aufsprühen von Flüssigkeit granuliert oder beschichtet werden kann.

Dazu ist ein Luftstrom vorgegeben, der von einem Zulufteinlaß 8 über eine Luftaufbereitung 9, beispielsweise zur Aufheizung oder auch zur Entfeuchtung oder zum Abfangen von Schwebstoffen ausgestattet, unterseitig in den Wirbelschichtapparat 2 gelangt, um aus dem Wirbelschichtapparat 2 über eine Abluftbehandlung 10 mit Hilfe eines Ventilators 11 als Saugquelle in einen Luftauslaß 12 zu gelangen. Die Abluftbehandlung kann u.a. einen Sicherheitsfilter (Polizeifilter) zur Absicherung der im Apparat befindlichen Filter 13 oder auch einen Wäscher für Lösungsmittel enthalten.

Innerhalb des Wirbelschichtapparats 2 sind in den Luftstrom Filter 13 eingeschaltet, die insbesondere leichte, schwebende und mit dem Luftstrom nach oben getragene Partikel aus dem zu behandelnden Material abfangen. Diese Filter können nach Abschluß der Materialbehandlung durch pneumatische, in Rückwärtsrichtung zum Luftstrom über eine Druckleitung 14 eingeleitete Reinigungsstöße unter Rückgewinnung des abgefangenen Staubmaterials zum Prozeßraum 3 zurückbefördert werden. Dies geschieht üblicherweise regelmäßig während einer Behandlung und im Zusammenhang mit einer Entleerung, die herkömmlich bei derartigen Anlagen mit Unzulänglichkeiten behaftet ist aber entsprechend der intensiven, effektiven und beschleunigten Materialbehandlung im Wirbelstromprozeß gleichfalls rasch, sauber und vollständig durchführbar sein soll.

Während zum Beschicken des Prozeßraums vor einer Wirbelschichtbehandlung ein verschließbarer Einfüllstutzen 15 oberhalb des Prozeßraums vorgesehen ist, erfolgt die Entleerung über ein Entleerungsventil 16 dicht oberhalb des Anströmbodens 7. Eine in der Darstellung in den Prozeßraum 3 hinein vorgeschobene oder zurückgezogene Ventilplatte 17, die während einer Wirbelschichtbehandlung mit der Wandung dicht abschließt, eröffnet in dieser Position einen freien Material-Austritt zu einem Fallrohr 18 in einen Produktcontainer 19, der über einen Filter 20 entlüftet wird. Der so eröffnete Austrittsweg aus dem Prozeßraum 3 über das Fallrohr 13 in den Produktcontainer 19 ist, abgesehen von dem Ausgang über das Filter 20, nach außen hin geschlossen. Der Produktcontainer 19 liegt unterhalb des Entleerungsventils 16, was mit einer in der Skizze wiedergegebenen Bodenplatte 21 angedeutet wird, durch die das Fallrohr 18 nämlich nach unten hin in ein Untergeschoß verläuft. Grundsätzlich denkbar sind aber auch höhengleich aufgestellte Produktcontainer mit einer Förderung durch einen höheren Druck aus dem Prozeßraum.

Während der Prozeßraum 3 bei der Wirbelschichtbehandlung unter der Saugwirkung des Ventilators 11 durchströmt wird und dabei auch gegenüber der Umgebung einen Unterdruck beibehält, der einem unerwünschten Austritt von Stoffen in die Umgebung entgegenwirkt, ist für die Entleerung in dieser Hinsicht eine Umstellung vorgesehen.

Zwischen Lufteinlaß 8 und Luftaufbereitung 9 ist ein Ventil 22 eingeschaltet, welches im Wechsel mit einem Bypass-Ventil 23 und für den Entleerungsvorgang geschlossen werden kann. Im Bypass ist hinter dem Ventil 23 eine Druckquelle 24 in Form eines Ventilators eingeschaltet, der bei geöffnetem Ventil 23 (und geschlossenem Ventil 22) Luft zum Anströmboden 7 hin fördert. Damit wird die Durchströmung des Anströmbodens 7 unterstützt, allerdings wird das Druckniveau im Prozeßraum 3 angehoben. Die Saugquelle 11 (Ventilator) wir nämlich durch einen Luftmengenmesser 25 (und eine Steuerleitung 26) geregelt, der die dem Anströmboden 7 zugeleitete Zuluftmenge überwacht. Bei unverändertem Sollwert und einer verstärkten Zuluftförderung wird dann die Saugquelle 11 in ihrer Leistung reduziert. Im Ergebnis bleibt die Durchströmung des Anströmbodens erhalten, allerdings wird das Druckniveau im Prozeßraum 3 angehoben. Damit aber werden bei geöffnetem Entleerungsventil 16 die Materialpartikel, die sich über dem Anströmboden 7 in einem fluidisierten Zustand befinden, zum Produktcontainer 19 hin ausgetragen. Diese Entleerung wird typischerweise für eine begrenzt Zeit von z.B. 2 Minuten aufrecht erhalten.

Insbesondere bei Wirbelschicht-Granuliervorgängen und bei Beschichtungen (Coating) können allerdings neben dem gewünschten Gutkorn auch größere, aglomerierte Partikel - Überkorn - entstehen, die gleichfalls ausgetragen werden sollen, zweckmäßig dann allerdings zur Trennung der Behandlungsergebnisse erst nach einem Wechsel des Produktcontainers. Hierfür wird vorteilhaft vorgesehen, die Leistung der Druckquelle mit dem Ventilator 24 heraufzusetzen und/oder den Sollwert für die Luftmenge so zu verändern, daß der Ventilator 11 in seiner Saugleistung noch weiter zurückgeht oder sogar abschaltet, um mit starker Durchströmung des Anströmbodens 7 und höherem Druck im Prozeßraum 3 das Grobkorn durch das Entleerventil hindurch herauszufördern.

Schließlich ist es möglich, das schwebefähige Feinmaterial aus dem Prozeßraum 3 und insbesondere auch aus dem Filter zurückzuholen, was wiederum vielfach mit einem Wechsel des Produktcontainers verbunden wird. Dazu wird die Zuluftmenge auf einen Wert gleich oder niedriger als der Wert bei der Gutkorn-Entleerung reduziert. Weiterhin wird der Luftmengenregler 25, der dazu einen einstellbaren Sollwert aufweist, zur Herunterregelung der Leistung des Ventilators 11 veranlaßt, um die Durchströmung des Anströmbodens 7 zu reduzieren und Feinmaterial aus dem Prozeßraum und dem darüberliegenden Filterraum durch das Entleerungsventil 16 herauszuführen. Dabei kann auch zweckmäßig über die Druckzuleitung 14 mit Hilfe pneumatischer Druckstöße eine Rückwärts-Durchströmung der Filter 13 vorgesehen werden, um Feinmaterial aus dem Filter zurückzufördern und dabei gleichzeitig das Filter zu reinigen.

Im Ergebnis läßt sich auf diese Weise eine schnelle, saubere und die Abtrennung von Über- und Unterkorn liefernde Entleerung einrichten, die mit systemgerechten Mitteln, insbesondere also auch unter Nutzung der Druck- und Durchströmungsverhältnisse und unter Einsatz der Fluidisierung ermöglicht ist.

## Patentansprüche

1. Wirbelschichtanlage (1) mit einem geschlossenen Wirbelschichtapparat (2), in dem auf einem Anströmboden (7) aufgelagertes, mit durch den Anströmboden (7) aufwärts hindurchgeleitetem Luftstrom in einen fluidisierten Zustand versetzbares und dabei einer chargenweisen Behandlung wie einem Trocknen, Sprühgranulieren oder Beschichten (Coating) unterziehbares Material nach der Behandlung über ein am Wirbelschichtapparat (2) im Bereich des Anströmbodens (7) angeordnetes Entleerventil (16) zu entleeren ist, wobei der Luftstrom während der Behandlung mittels einer stromab angeordneten Saugquelle (11) bei einem Unterdruck im Wirbelschichtapparat (2) oberhalb des Anströmbodens (7) aufrechterhalten wird, **dadurch gekennzeichnet, daß** stromauf im Luftstrom vor dem Wirbelschichtapparat (2) eine beim Entleeren zuschaltbare Druckquelle (24) angeordnet ist.

2. Wirbelschichtanlage nach Anspruch 1, **gekennzeichnet durch** einen im Luftstrom zwischen der Druckquelle (24) und dem Anströmboden (7) eingeschalteten und die Luftmengenleistung der Saugquelle (11) regelnden Luftmengenmesser (25).

3. Wirbelschichtanlage nach Anspruch 2, **dadurch gekennzeichnet, daß** der Luftmengenmesser (25) mit einer veränderlichen Steuerung für die Saugleistung (11) ausgestattet ist.

4. Wirbelschichtanlage nach Anspruch 1, 2 oder 3, **dadurch gekennzeichnet, daß** die Druckquelle (24) eine Steuerung für die Druckluftleistung aufweist.

5. Wirbelschichtanlage nach einem der Ansprüche 1 bis 4, **dadurch gekennzeichnet, daß** im Wirbelschichtapparat (2) stromab hinter dem Anströmboden (7) zumindest ein Filter (13) angeordnet ist und daß der Wirbelschichtapparat (2) stromab hinter dem Filter mit einem Druckluftanschluß (14) für eine Rückströmung durch den Filter (13) ausgestattet ist.

6. Wirbelschichtanlage nach einem der Ansprüche 1 bis 5, **gekennzeichnet durch** zumindest einen an das Entleerventil (16) anzuschließenden Produktcontainer (19).

7. Wirbelschichtanlage nach Anspruch 6, **dadurch gekennzeichnet, daß** der Produktcontainer (19) über eine nach unten gerichtete Fallleitung (18) mit dem Entleerventil (16) verbunden ist.

8. Wirbelschichtanlage nach Anspruch 6 oder 7, **dadurch gekennzeichnet, daß** der Produktcontainer (19) eine mit einer Filtereinrichtung (20) verbundene Entlüftungsöffnung aufweist.
